# EUROPEAN PATENT SPECIFICATION

(11) **EP 2 621 988 B1**
(45) Date of publication and mention of the grant of the patent: **14.09.2016**
(21) Application number: 11710448.9
(22) Date of filing: 10.03.2011
(51) Int. Cl.: C08G 18/62, C08G 18/79, C08G 18/38, C09D 175/12, C09D 127/12, C08K 5/17

(54) **COATING COMPOSITION COMPRISING A FLUORINATED RESIN-BASED COMPONENT**
BESCHICHTUNGSZUSAMMENSETZUNG MIT EINER FLUORIERTEN KOMPONENTE AUF HARZBASIS
COMPOSITION DE REVÊTEMENT COMPRENANT UN COMPOSANT À BASE DE RÉSINE FLUORÉE

(30) Priority: 30.09.2010 IT MI20101790
(43) Date of publication of application: 07.08.2013
(73) Proprietor: Innoventions S.r.l., 20126 Milano (IT); Politecnico di Milano, 20133 Milano (IT)
(72) Inventor: TURRI, Stefano, Ettore, Romano, I-20047 Brugherio (MB) (IT); LOCASPI, Angelo, 20162 Milano (IT)
(74) Representative: Giavarini, Francesco
(86) International application number: PCT/EP2011/053655
(87) International publication number: WO 2012/041534

(56) References cited:
- EP-A1- 2 088 165
- EP-A2- 0 416 501
- US-A1- 2005 271 881
- DATABASE WPI Week 199231 Thomson Scientific, London, GB; AN 1992-256515 XP00265293, & JP 4 175327 A (DAINIPPON INK & CHEM KK) 23 June 1992 (1992-06-23)
- Dudley J. Primeaux II: "Polyurea Elastomer Technology:History, Chemistry & Basic Formulating Techniques", , 2008, XP002652935, Retrieved from the Internet: URL:http://www.polyurea.com/cnt/docs/PUAHi stChemForm2008.pdf [retrieved on 2011-07-22]

## Description

The present invention relates to a coating composition comprising a fluorinated resin-based component.

In particular, the present invention relates to a component of a coating composition comprising a fluorinated resin and an aspartic acid ester.

Fluoropolymer-based protective coatings have been used for several decades in many industrial sectors, in particular in the building and architecture sector. This type of coating is widely used due to its characteristics of strength and durability.

Fluorinated resins are therefore of fundamental importance in building and architecture, as the coating obtained is capable of withstanding sudden changes in temperature, avoiding phenomena of delamination and cracking of the coating; these resins are also capable of withstanding exposure to sunlight which, in most synthetic resin-based coatings, makes the coating fragile and subject to variations in colour.

These particular characteristics of strength allow fluorinated resins to be used, for example, to coat building façades, load-bearing structures of bridges or constructions, but also to coat boats, cars or furnishing elements which are normally subject to substantial wear caused by the weather conditions to which they are exposed.

Fluorinated resins are also used for their versatility; in fact, they can be applied to surfaces made of different materials, such as metal, wood, plastic, but also masonry, brick and composite materials, materials used in the building and architecture sector.

Due to the high cost and at times the difficulty of processing fluoropolymers, other resins are sometimes added to the formulations, in particular acrylic resins, even in very large quantities. At times the fluoropolymers are added in more or less significant quantities to acrylic polymers so as to improve their repellency properties and reduce friction.

In very high durability coatings, as in the examples described above, one case that has been studied in depth and widely used is that of blends of acrylic resins and polyvinyldene fluoride (PVDF). However, due to the structural properties of PVDF (semi-crystalline with high melting point, high molecular weight, non cross linkable), it can only be applied industrially with high temperature coating processes (i.e. coil coating) and is not suitable for coating buildings, infrastructures and plants in the field at moderate temperatures. Nonetheless, some types of PVDF that can be applied at low temperature have recently been developed.

Other systems used as coatings provide for the use of fluoropolymers with different composition and lower molecular weight which can be formulated as two-component coatings and cross linked on the field, for example with polyisocyanates. These structures are generally copolymers of chlorotrifluoroethylene (CTFE) with ether vinyls or ester vinyls; some of these monomers have hydroxyl functionality.

The patent GB 2.081.727 describes a composition containing fluoropolymers, used as coating.

In particular, the composition is constituted by 40-60% of fluoroolefin, 5-45% of cyclohexyl vinyl ether, 5-45% of alkyl vinyl ether and 3-15% of hydroxyalkyl ether. In particular, the best performances are obtained when the composition is narrowed to the following values: 45-55% of fluoroolefin, 10-30% of cyclohexyl vinyl ether, 10-35% of alkyl vinyl ether and 5-13% of hydroxyalkyl vinyl ether.

However, coatings obtained from mixtures of fluoropolymers, as described above, and from acrylic resins, have some drawbacks. In fact, they are heterogeneous, non-transparent, fragile and, due to their chemical structure, are subject to loss of transparency, of gloss and deterioration of the optical-aesthetic properties of the coating.

Besides acrylic resins, various combinations of relatively economical resins and fluoropolymers such as epoxy, polyamide, polyurethane, polyester or alkyd systems have been tested over the last decades, but without appreciable improvements.

Another drawback of coatings containing fluoropolymers is the high quantity of organic solvents used to obtain a product that can be applied easily. The solvents normally used in these compositions are volatile organic solvents, which are harmful both to human health, and therefore particularly harmful for the operator applying them, and to the environment. Recent EU regulations impose the reduction of volatile organic solvents present in coatings in order to protect the health of operators in the sector and the environment.

Another factor to be considered in relation to the coatings described is the high cost of the materials of which these compositions are composed, in particular the high cost of fluorinated resins, which at times are not used due to this problem of cost, albeit to the detriment of the quality of the coating.

It is therefore desirable to provide a fluoropolymer-based coating composition which is homogeneous and transparent and which, after application, is not fragile and is resistant to weathering, so that it can be used for outdoor protective coatings or for structures exposed to severe weather or to normal weather conditions.

It would also be desirable to provide a coating composition which is easily applied in normal weather conditions, which can be applied by operators directly in the field without the aid of special industrial equipment.

It would also be desirable to provide a coating composition which is low cost, which in any case maintains the quality of the coating unchanged and the constituent components of which have a low content of volatile organic solvents in compliance with current regulations.

In order to answer current market requirements both in terms of function and quality, and as regards protection of the environment and of the health of citizens, the need emerges to provide a coating composition that is easy to apply, low cost and whose constituent components contain a limited quantity of solvents and other substances harmful for human health and for the environment, but which is capable, after application thereof to a surface, of providing a durable and high quality coating.

Therefore, the main aim of the present invention is to provide a coating composition with which it is possible to satisfy the qualitative and economic characteristics of the coating obtained, and to satisfy current regulations relating to hazardous and toxic materials.

Within this aim, a first object of the present invention is to provide a component of a coating composition containing a limited quantity of volatile organic solvents and of other substances considered harmful and which reduces costs.

A further object of the present invention is to provide a coating composition which can be easily applied with normal equipment, which can be applied in normal weather conditions making it possible to operate directly in the field without the aid of industrial machinery.

Yet another object of the subject-matter of the present invention is to provide a coating obtained by applying a composition as indicated above, which is homogeneous and transparent, which is durable in time and which is not subject to deterioration caused by weather conditions and pollutants.

This aim and said and other objects which shall be more apparent in the course of the present invention are achieved by means of a component of a coating composition characterized in that it comprises at least one hydroxyl-functional fluorinated polymer and one aspartic acid ester.

Fluoropolymer-based coating compositions are composed of two separate components that are combined in a mixture during the application phase or shortly before this phase. In particular, a mixture containing polyisocyanate is added to a component containing a mixture of fluoropolymers and other commonly used materials, such as dispersing, wetting, anti-sedimentation agents, fillers, pigments, etc., and this mixture reacts with the hydroxyl functional groups of the fluoropolymer to form the coating by cross linking of the two components. The speed of this reaction, which can take place in a few hours or in a few minutes, varies both according to the type and the quality of the polymers used and according to the type of additives that are added to the mixture. A reaction time (pot life) that is too fast does not allow satisfactory application, whereas a reaction that is too slow does not guarantee the formation of an optimum coating.

Within the present invention, in order to reduce the costs and decrease the quantity of volatile organic solvents contained in normal formulations on the market, it has surprisingly been found that adding aspartic acid esters to the component containing fluoropolymers considerably reduces the quantity of organic solvents required, while obtaining a product that is homogeneous and easy to apply, with numerous advantages both from the viewpoint of cost and from the viewpoint of the environment. Moreover, even more surprisingly it has been found that the addition of these aspartic acid esters to the formulation of fluoropolymers in the composition interval indicated maintains the vitreous transition temperature (Tg) of the cross linked coating film more or less constant. Tg is the transition temperature between the amorphous-vitreous and rubbery state typical of polymers. Within the sphere of coatings, a high Tg allows high surface hardnesses to be obtained and improves the durability of the material, while it can cause problems in relation to film forming capacity of the coating. It is therefore important to be able to modify the fluoropolymer formulation with the addition of the aspartic acid esters described above also in significant quantities, without modifying the Tg.

The addition of these esters deriving from aspartic acid also reduces the quantity of fluoropolymers required to obtain a high quality product, as the amino groups of the aspartic acid contribute to the cross linking reaction. Reduction of the quantity of fluoropolymer in the composition contributes to a substantial reduction in the costs of these coatings.

According to the present invention, the component of the coating composition which comprises the functionalized fluorinated polymer and the aspartic acid ester is preferably composed of a quantity of functionalized fluorinated polymer ranging from 60 to 99% and a quantity of aspartic acid ester ranging from 1 to 40%. The percentage quantities referred to the aforesaid formulation are expressed in weight in relation to the total quantity of composition, therefore they refer to the dry weight of the components without any solvent.

More preferably, the quantity of fluoropolymer present in the component according to the present invention ranges from 70 to 75% and the quantity of aspartic acid ester ranges from 25 to 30%. These percentage values are also referred to the weight of the component without solvents.

According to the present invention, the aspartic acid ester of the component of the coating composition preferably has a general formula as described below. 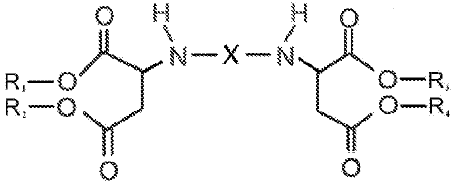 wherein R₁, R₂, R₃, R₄ is a C₁-C₆ linear or branched alkyl radical, and X is a bridge group constituted by a C₄-C₂₀ alkyl, aryl,alkyl-aryl,aryl-alkyl radical.

In a preferred formulation, X is chosen in the group constituted by:

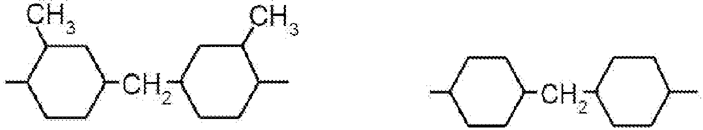

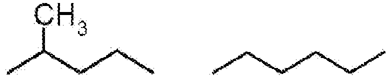

In an even more preferred formulation, the radicals R₁, R₂, R₃, R₄ are ethyl and the bridge group X is

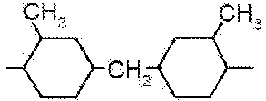

The aspartic acid esters used in the formulations described in the present text have a viscosity ranging from 500 to 2000 mPas, preferably a viscosity ranging from 1000 to 1800 mPas, even more preferably a viscosity ranging from 1400 to 1600 mPas, said viscosity being measured at 25°C with a Brookfield viscometer.

The functionalized fluorinated polymer according to the present invention is a polymer obtained from radical or ionic polymerization of a fluoroolefin and from an unsaturated monomer.

The fluoroolefin described in the present invention has a general formula of the type:

CF2 = CXY

where:
if X is H ----> Y is H,
if X is Cl ----> Y is F,
if X is F ----> Y is F,
while the unsaturated monomer is chosen in the group constituted by: ethylene, butene, propylene, styrene, substituted styrene, alpha-methyl styrene, isobutylene, methacrylate, methyl methacrylate, ethyl methacrylate, propyl methacrylate, isopropyl methacrylate, butyl methacrylate, isobutyl methacrylate, ter-butyl methacrylate, 2-ethylhexyl methacrylate, lauryl methacrylate, isobornyl methacrylate, cyclohexyl methacrylate, 3,3,5-trimethylcyclohexyl methacrylate, glycidyl methacrylate, functionalized methacrylates, vinyl ester, vinyl acetate, vinyl butyrate, vinyl 3,4-dimethoxybenzoate, vinyl propionate, vinyl neodecanoate, vinyl pivalate, vinyl neononanoate, vinyl benzoate, vinyl pyridine, divinylbenzene, vinyl naphthalene, divinyl naphthalene and mixtures thereof.

Said functionalized fluorinated polymer has hydroxyl functional groups capable of reacting with the functional groups of the isocyanate in order to produce the cross linking required to form the protective coating. The isocyanate used can be aromatic, aliphatic or cycloaliphatic, in the form of prepolymer adduct, or of non-cyclic trimer (biuret), or of cyclic trimer (isocyanurate), based on 1,6 hexamethylene diisocyanate or isophorone diisocyanate (mixture of isomers), toluene diisocyanate (mixture of isomers), diphenylmethane diisocyanate.

The coating composition according to the present invention therefore comprises the product of the reaction between a mixture of functionalized fluorinated polymer and an aspartic acid ester with an aromatic or aliphatic isocyanate, in particular a coating of the polyurea-polyurethane type is obtained from the reaction of these two components as polyurethane and polyurea groups are formed simultaneously. More in particular, the hydroxyl groups of the fluoropolymer react with the isocyanate to give urethane bonds, while the secondary amine groups of the aspartate react with the isocyanate to give urea bonds.

The functionalized fluorinated polymer used to obtain a component of a coating composition according to the present invention can be a fluorinated resin present on the market, such as LUMIFLON® by Asahi Glass Co., although said component can advantageously be obtained with any type of functionalized fluorinated polymer of the type ZEFFLE® GK by Daikin Industries Ltd or FLUONATE® by DIC Corporation, or any other product capable of reacting with isocyanate polymers.

For better comprehension of the advantages obtained by a coating composition comprising a component according to the present invention, some examples of formulations containing functionalized fluorinated polymers and aspartic acid esters according to the composition percentages indicated previously are listed below, and the values of the parameters used for qualitative evaluation of the composition according to the invention are compared with the values of the parameters obtained with a coating composition without aspartic acid esters. The degree of cross linking and of chemical resistance of the coating was evaluated by rubbing a cotton wool ball soaked with methylethylketone to and fro over the coated surface, exerting a force weight of around 1 kg and at a frequency of one cycle per second. The chemical resistance of the coating is considered optimal when it remains unchanged after at least 100 double strokes according to EN 13523-11 (2004) - Part 11: M.E.K./SOLVENT RUBBING TEST.

The contact angle with bidistilled H₂O was measured with the sessile drop method with an OCA 20 instrument (Dataphysics).

The shear modulus of the coating (G') was measured with the dynamic mechanical analysis (DMA) method in shear sandwich mode on film with a thickness of around 100 micrometers, stressed in a sinusoidal manner with deformation amplitude of 1%, frequency of 1 Hz and thermal cycle from -50°C to +150°C at the velocity 3°/min.

The surface gloss was measured with the ASTM D 523 Standard Test Method for Specular Gloss.

The vitreous transition temperature (Tg) of the coating was measured with differential scanning calorimetry (DSC) on samples of film dried with the following thermal cycle: from RT to + 150°C, from +150°C to -50°C, from -50°C to +150°C at the velocity of 20°/min.

The environmental durability of the coating was evaluated measuring the gloss and colour retention after exposure to the QUV-test with the following cycle: 4 hours of irradiation at 60°C, with UV-B 313 nm lamps; 4 hours at 40°C, in the presence of condensation according to the method ASTM G53 "Practice for Operating Light- and Water-Exposure Apparatus (Fluorescent UV-Condensation Type) for Exposure of Materials".

The formulations of the examples were applied with a coating bar to glass substrates or metal panels coated with epoxy primer, obtaining dry films with a thickness in the order of 40-50 dry microns.

Characterizations were implemented after cross linking for 7 days at ambient temperature and 50% RH.

**COMPARATIVE EXAMPLE 1 AND EXAMPLES 2-5**

| | 1 | 2 | 3 | 4 | 5 |
|---|---|---|---|---|---|
| Resin based on CTFE - hydroxy vinyl ethers with EW 1123 | 60 | 58.25 | 56.6 | 53.37 | 48.39 |
| Desmophen® 1520 NH | 0 | 2.91 | 5.66 | 10.71 | 19.35 |
| Solvents: xylol | 40 | 38.84 | 37.74 | 35.72 | 32.26 |
| Total | 100 | 100 | 100 | 100 | 100 |
| | | | | | |
| Trimer of hexamethylene diisocyanate with EW 190 | 9.72 | 11.3 | 12.7 | 15.24 | 20 |
| Total | 109.72 | 111.3 | 112.7 | 115.24 | 120 |
| | | | | | |
| Contact angle with water | 88.9 | 90.6 | 89.6 | 89.8 | 88.5 |
| Vitreous Transition Temperature | 50.1 | 50.5 | 50.8 | 49.8 | 49.5 |
| G' at 23°C | 36 | 24 | 38 | 36 | 32 |
| Gloss | 85 | 86 | 86 | 87 | 88 |

**COMPARATIVE EXAMPLE 6 AND EXAMPLES 7-10**

| | 6 | 7 | 8 | 9 | 10 |
|---|---|---|---|---|---|
| Resin based on CTFE - hydroxy vinyl ethers with EW 1121 | 50 | 48.78 | 47.62 | 45.45 | 41.67 |
| Desmophen® 1520 NH | 0 | 2.44 | 4.76 | 9.10 | 16.66 |
| Solvent: mixture of xylol and methyl-isobutylketone | 50 | 48.78 | 47.62 | 45.45 | 41.67 |
| Total | 100 | 100 | 100 | 100 | 100 |
| | | | | | |
| Trimer of hexamethylene diisocyanate with EW 190 | 8.12 | 9.44 | 10.71 | 13.08 | 17.22 |
| Total | 108.12 | 109.44 | 110.71 | 113.08 | 117.22 |
| | | | | | |
| Contact angle with water | 81.1 | 81.4 | 81.8 | 81.2 | 81.5 |
| Vitreous Transition Temperature | 63.2 | 63.1 | 64.8 | 62.4 | 59.1 |
| G' at 23°C | 23 | 30 | 44 | 34 | 35 |
| Gloss | 85 | 85 | 86 | 87 | 87 |

**COMPARATIVE EXAMPLE 11 AND EXAMPLES 12-13**

| | 11 | 12 | 13 |
|---|---|---|---|
| Resin based on CTFE - hydroxy vinyl ethers with EW 1123 | 34.2 | 33.36 | 29.700 |
| Desmophen® 1520 NH | 0 | 2.83 | 12.375 |
| Ti Pure® 706 | 24.5 | 24.13 | 33.5 |
| Solvents and additives | 41.3 | 39.68 | 24.425 |
| Total | 100 | 100 | 100 |
| | | | |
| Trimer of hexamethylene diisocyanate with EW 190 | 5.73 | 8.18 | 17.05 |
| Solvent: n-butyl acetate | 4.27 | 4.82 | 10.02 |
| Total | 110.0 | 113.0 | 127.07 |
| | | | |
| Initial gloss | 80 | 83 | 86 |
| Variation in gloss after 2000 hours | 77 | 82.8 | 80 |
| Variation in colour after 2000 hours | 0.49 | 0.62 | 0.78 |
| PVC (pigment volume concentration) | 15.34 | 15.23 | 15.12 |

**COMPARATIVE EXAMPLE 14 AND EXAMPLES 15-16**

| | 14 | 15 | 16 |
|---|---|---|---|
| Resin based on CTFE - hydroxy vinyl ethers with EW 1121 | 34.00 | 30.17 | 25.483 |
| Desmophen® 1520 NH | 0 | 2.90 | 11.957 |
| TiPure® 706 | 23.5 | 24.74 | 32.477 |
| Solvents and additives | 42.5 | 42.19 | 30.083 |
| Total | 100 | 100 | 100 |
| | | | |
| Trimer of hexamethylene diisocyanate with EW 190 | 6.31 | 8.56 | 15.75 |
| Solvent: n-butyl acetate | 3.70 | 5.04 | 9.25 |
| Total | 110.0 | 113.6 | 125.00 |
| | | | |
| Initial gloss | 75 | 79 | 84 |
| Variation in gloss after 2000 hours | 76 | 75 | 75 |
| Variation in colour after 2000 hours | 0.83 | 0.92 | 1.81 |
| PVC (pigment volume concentration) | 15.26 | 15.38 | 15.02 |

The examples above show how the characteristics of the coating obtained by a composition containing an aspartic acid ester and consequently a smaller quantity of functionalized fluorinated polymer are comparable to the characteristics of conventional coatings. Formulations containing titanium dioxide also maintain the same characteristics as resins obtained according to formulations currently available on the market.

A coating obtained with a composition containing a component according to the present invention provides a product with characteristics of high quality and low cost, which can be easily applied with any coating technique (brush, roller, spray), but which is also usable in industrial coating plants.

With a coating composition formulated according to the present invention the quantity of solvents in the composition can also be reduced, with enormous advantages both in terms of cost and of environmental protection, while maintaining the main characteristics of the coating obtained with these compositions unchanged.

With a coating composition according to the present invention it is therefore possible to coat structures of any material and form, guaranteeing optimal and durable protection.

## Claims

1. Component of a coating composition **characterized in that** it comprises at least one functionalized fluorinated polymer and one aspartic acid ester, wherein the functional group of the fluorinated polymer is a hydroxyl group.

2. Component according to claim 1, **characterized in that** said functionalized fluorinated polymer is present in a quantity ranging from 60% to 99% and said aspartic acid ester is present in a quantity ranging from 1% to 40%, said percentage quantities being expressed in weight in relation to the total weight of the component.

3. Component according to claim 1, **characterized in that** said functionalized fluoro-polymer is present in a quantity ranging from 70% to 75% and said aspartic acid ester is present in a quantity ranging from 25% to 30%, said percentage quantities being expressed in weight in relation to the total weight of the component.

4. Component according to one or more of the preceding claims, **characterized in that** said aspartic acid ester has the general formula 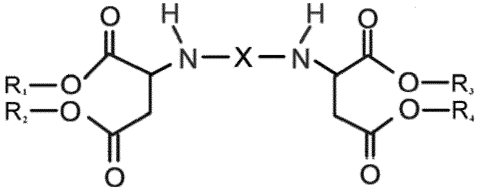 wherein R₁, R₂, R₃, R₄ are C₁-C₆ linear or branched alkyl radicals, X is a bridge group constituted by C₄-C₂₀ alkyl, aryl, alkyl-aryl, aryl-alkyl radical.

5. Component according to claim 4, wherein
X is chosen in the group constituted by:

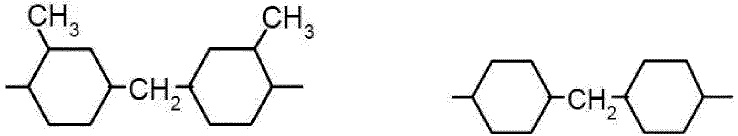

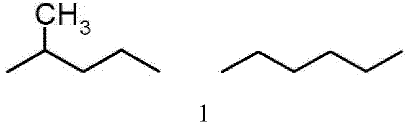

6. Component according to claim 5, wherein
R₁,R₂,R₃, R₄ are ethyl, and
X is

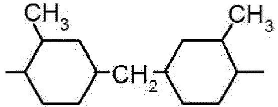

7. Component according to one or more of the preceding claims, **characterized in that** said functionalized fluoro-polymer is a polymer obtained from radical or ionic polymerization of a fluoroolefin with the general formula
CF₂ = CXY
where:
if X is H Y is H,
ifXisClYisF,
ifXisFYisF,
and from an unsaturated monomer, said unsaturated monomer being chosen in the group constituted by:
ethylene, butene, propylene, styrene, substituted styrene, alpha-methyl styrene, isobutylene, methacrylate, methyl methacrylate, ethyl methacrylate, propyl methacrylate, isopropyl methacrylate, butyl methacrylate, isobutyl methacrylate, ter-butyl methacrylate, 2-ethylhexyl methacrylate, lauryl methacrylate, isobornyl methacrylate, cyclohexyl methacrylate, 3,3,5-trimethylcyclohexyl methacrylate, glycidyl methacrylate, functionalized methacrylates, vinyl ester, vinyl acetate, vinyl butyrate, vinyl 3,4-dimethoxybenzoate, vinyl propionate, vinyl neodecanoate, vinyl pivalate, vinyl neononanoate, vinyl benzoate, vinyl pyridine, divinylbenzene, vinyl naphthalene, divinyl naphthalene and mixtures thereof, with the proviso that said functionalized fluorinated polymer has hydroxyl functional groups.

8. Coating composition **characterized in that** it comprises the reaction product of the component according to one or more of claims 1 to 7 and an aromatic, aliphatic or cycloaliphatic isocyanate, said isocyanate being in the form of prepolymer adduct, or of non-cyclic trimer, or of cyclic trimer.

9. Coating composition according to claim 8, **characterized in that** said isocyanate is chosen in the group constituted by:
1,6-hexamethylene diisocyanate, isophorone diisocyanate. toluene diisocyanate, diphenylmethane diisocyanate and mixtures thereof.

10. Manufactured article which comprises a coating obtained by applying a composition according to claims 8 or 9.

## Patentansprüche

1. Komponente eines Beschichtungsgemisches, **dadurch gekennzeichnet, dass** sie zumindest ein funktionalisiertes fluorisiertes Polymer und einen Asparaginsäureester aufweist, wobei die funktionale Gruppe des fluorisierten Polymers eine Hydroxylgruppe ist.

2. Komponente nach Anspruch 1, **dadurch gekennzeichnet, dass** das funktionalisierte fluorisierte Polymer in einer Menge zwischen 60 und 99% vorhanden ist und der Asparaginsäureester in einer Menge zwischen 1 und 40% vorhanden ist, wobei die Prozentzahlen als Gewicht im Verhältnis zu dem Gesamtgewicht der Komponente ausgedrückt sind.

3. Komponente nach Anspruch 1, **dadurch gekennzeichnet, dass** das funktionalisierte Fluoro-Polymer in einer Menge zwischen 70 und 75% vorhanden ist und der Asparaginsäureester in einer Menge zwischen 25 und 30% vorhanden ist, wobei die Prozentzahlen als Gewicht im Verhältnis zu dem Gesamtgewicht der Komponente ausgedrückt sind.

4. Komponente nach einem oder mehreren der vorgenannten Ansprüche, **dadurch gekennzeichnet, dass** der Asparaginsäureester die allgemeine Formel 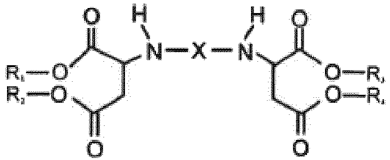 aufweist, wobei R₁, R₂, R₃, R₄ C₁-C₆-lineare oder verzweigte Alkylradikale sind, X eine Brückengruppe ist, die aus C₄-C₂₀ Alkyl-, Aryl-, Alkyl-Aryl-Aryl-Alkylradikalen besteht.

5. Komponente nach Anspruch 4, wobei X in der Gruppe ausgewählt wird, die aus Folgendem besteht:

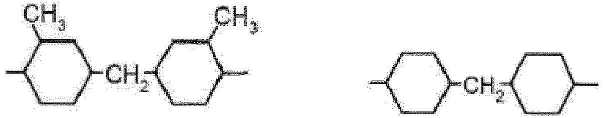

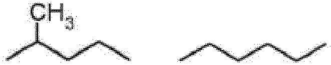

6. Komponente nach Anspruch 5, wobei R₁, R₂, R₃, R₄ Ethyl sind und X Folgendes ist:

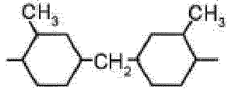

7. Komponente nach einem oder mehreren der vorgenannten Ansprüche, **dadurch gekennzeichnet, dass** das funktionalisierte Fluoro-Polymer ein Polymer ist, das aus der radikalen oder ionischen Polymerisierung eines Fluoroolefins mit der allgemeinen Formel
CF₂ = CXY
erhalten wird, wobei:
falls X H ist, Y H ist,
falls X Cl ist, Y F ist,
falls X F ist, Y F ist,
und aus einem ungesättigten Monomer, wobei das ungesättigte Monomer aus der Gruppe ausgewählt wird, die aus Folgendem besteht:
Ethylen, Buten, Propylen, Styren, substituiertes Styren, Alpha-Methyl-Styren, Isobutylen, Methacrylat, Methyl-Methacrylat, Ethyl-Methacrylat, Propyl-Methacrylat, Isopropyl-Methacrylat, Butyl-Methaciylat, Isobutyl-Methaciylat, Tertiär-Butyl-Methaciylat, 2-Ethylhexyl-Methacrylat, Lauryl-Methacrylat, Isobornyl-Methacrylat, Cyclohexyl-Methacrylat, 3,3,5-Trimethylcyclohexyl-Methaciylat, Glycidyl-Methaciylat, funktionalisierte Methacrylate, Vinylester, Vinylacetat, Vinylbutyrat, Vinyl-3,4-Dimethoxybenzoat, Vinyl-Propionat, Vinyl-Neodecanoat, Vinyl-Pivalat, Vinyl-Neononanoat, Vinyl-Benzoat, Vinyl-Pyridin, Divinylbenzen, Vinyl-Naphtalen, Divinyl-Naphtalen und Mischungen daraus, unter der Bedingung, dass das funktionalisierte, fluorisierte Polymer funktionale Hydroxylgruppen aufweist.

8. Beschichtungsgemisch, **dadurch gekennzeichnet, dass** es das Reaktionsprodukt der Komponente nach einem der Ansprüche 1 bis 7 und ein aromatisches, aliphatisches oder cycloaliphatisches Isocyanat aufweist, wobei das Isocyanat in der Form eines Präpolymer-Addukts, oder eines nicht-zyklischen Trimers, oder eines zyklischen Trimer vorliegt.

9. Beschichtungsgemisch nach Anspruch 8, **dadurch gekennzeichnet, dass** das Isocyanat aus der Gruppe ausgewählt ist, die aus Folgendem besteht:
1,6-Hexamethylen-Diisocyanat, Isophoron-Diisocyanat, Toluen-Diisocyanat, Diphenylmethan-Diisocyanat und Mischungen daraus.

10. Hergestellter Artikel, der eine Beschichtung aufweist, die durch das Verwenden eines Gemisches nach den Ansprüchen 8 oder 9 erhalten wird.

## Revendications

1. Composant d'une composition de revêtement, **caractérisé en ce qu'**il comprend au moins un polymère fluoré fonctionnalisé et un ester d'acide aspartique, dans lequel le groupe fonctionnel du polymère fluoré est un groupe hydroxyle.

2. Composant selon la revendication 1, **caractérisé en ce que** ledit polymère fonctionnalisé fluoré est présent en une quantité allant de 60% à 99% et ledit ester d'acide aspartique est présent en une quantité allant de 1% à 40%, lesdites quantités en pourcentage étant exprimées en poids par rapport au poids total du composant.

3. Composant selon la revendication 1, **caractérisé en ce que** ledit polymère fluoré fonctionnalisé est présent en une quantité allant de 70% à 75% et ledit ester d'acide aspartique est présent en une quantité allant de 25% à 30%, lesdites quantités en pourcentage étant exprimées en poids par rapport au poids total du composant.

4. Composant selon l'une ou plusieurs des revendications précédentes, **caractérisé en ce que** ledit ester d'acide aspartique présente la formule générale 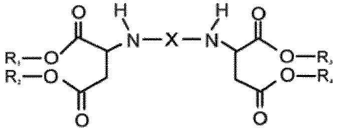 dans laquelle
R₁, R₂, R₃, R₄ sont des groupes alkyles linéaires ou ramifiés en C₁-C₆,
X est un groupe de pontage constitué par un groupe alkyle, aryle, alkyle-aryle, aryle-alkyle en C₄-C₂₀.

5. Composant selon la revendication 4, dans lequel X est choisi dans le groupe constitué par:

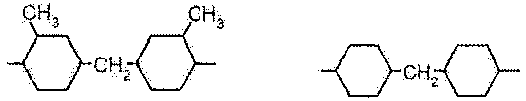

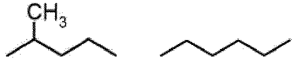

6. Composant selon la revendication 5, dans lequel
R₁, R₂, R₃, R₄, représentent un groupe éthyle,
X est

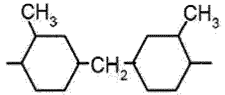

7. Composant selon l'une ou plusieurs des revendications précédentes, **caractérisé en ce que** ledit polymère fluoré fonctionnalisé est un polymère obtenu par polymérisation radicalaire ou ionique d'une fluorooléfine de formule générale
CF₂ = CXY
dans laquelle:
si X est H, Y est H,
si X est Cl, Y est F,
si X est F, Y est F,
et d'un monomère insaturé, ledit monomère insaturé étant choisi dans le groupe constitué par l'éthylène, le butène, le propylène, le styrène, le styrène substitué, l'alpha-méthylstyrène, l'isobutylène, le méthacrylate, le méthacrylate de méthyle, le méthacrylate d'éthyle, le méthacrylate de propyle, le méthacrylate d'isopropyle, le méthacrylate de butyle, le méthacrylate d'isobutyle, le méthacrylate de tert-butyle, le méthacrylate de 2-éthylhexyle, le méthacrylate de lauryle, le méthacrylate d'isobornyle, le méthacrylate de cyclohexyle, le méthacrylate de 3,3,5-triméthylcyclohexyle, le méthacrylate de glycidyle, les méthacrylates fonctionnalisés, un ester vinylique, l'acétate de vinyle, le butyrate de vinyle, le 3,4-diméthoxybenzoate, le propionate de vinyle, le néodécanoate de vinyle, le pivalate de vinyle, le néononanoate de vinyle, le benzoate de vinyle, la vinylpyridine, le divinylbenzène, le vinylnaphtalène, le divinylnaphtalène et leurs mélanges, avec la condition que le ledit polymère fluoré fonctionnalisé comporte des groupes fonctionnels hydroxyles.

8. Composition de revêtement **caractérisée en ce qu'**elle comprend le produit de réaction du composant selon l'une ou plusieurs des revendications 1 à 7 et d'un isocyanate aromatique, aliphatique ou cycloaliphatique, ledit isocyanate étant sous la forme d'un prépolymère d'addition ou de trimère non cyclique, ou d'un trimère cyclique.

9. Composition de revêtement selon la revendication 8, **caractérisée en ce que** ledit isocyanate est choisi dans le groupe constitué par le diisocyanate d'1,6-hexaméthylène, le diisocyanate d'isophorone, le diisocyanate de toluène, le diisocyanate de diphénylméthane et des mélanges de ceux-ci.

10. Article manufacturé qui comprend un revêtement obtenu par application d'une composition selon les revendications 8 ou 9.
